# EUROPÄISCHE PATENTSCHRIFT

(11) **EP 3 539 628 B1**
(45) Veröffentlichungstag und Bekanntmachung des Hinweises auf die Patenterteilung: **18.11.2020**
(21) Anmeldenummer: 18162346.3
(22) Anmeldetag: 16.03.2018
(51) Int. Cl.: A63G 7/00, A63G 31/16

(54) **SYNCHRONISIERUNGSVORRICHTUNG ZUM SYNCHRONISIEREN VON HEAD-MOUNTED-DISPLAYS MIT EINER VIRTUELLEN WELT IN EINEM FAHRGESCHÄFT, FAHRGESCHÄFT MIT EINER DERARTIGEN SYNCHRONISIERUNGSVORRICHTUNG SOWIE VERFAHREN ZUM BETREIBEN EINES SOLCHEN FAHRGESCHÄFTS**
SYNCHRONIZING DEVICE FOR SYNCHRONIZING OF HEAD-MOUNTED-DISPLAYS WITH A VIRTUAL WORLD IN A RIDE, RIDE WITH SUCH A SYNCHRONIZATION DEVICE AND METHOD FOR OPERATING SUCH A RIDE
DISPOSITIF DE SYNCHRONISATION DESTINÉ À LA SYNCHRONISATION DES LUNETTES DE VISUALISATION AVEC UN MONDE VIRTUEL DANS UNE ATTRACTION FORAINE, ATTRACTION FORAINE POURVUE D'UN TEL DISPOSITIF DE SYNCHRONISATION ET PROCÉDÉ DE FONCTIONNEMENT D'UNE TELLE ATTRACTION FORAINE

(43) Veröffentlichungstag der Anmeldung: 18.09.2019
(73) Patentinhaber: VR Coaster GmbH & Co. KG, 67663 Kaiserslautern (DE)
(72) Erfinder: Heyse, Michael, 55118 Mainz (DE)
(74) Vertreter: Westphal, Mussgnug & Partner Patentanwälte mbB

(56) Entgegenhaltungen:
- WO-A1-2017/153532
- DE-A1-102015 100 943
- DE-U1-202017 004 917
- US-A1- 2017 072 316
- US-A1- 2017 080 349

## Beschreibung

Die vorliegende Erfindung betrifft eine Synchronisierungsvorrichtung zum Synchronisieren von Head-Mounted-Displays mit einer virtuellen Welt in einem Fahrgeschäft. Weiterhin betrifft die Erfindung ein Fahrgeschäft mit einer derartigen Synchronisierungsvorrichtung. Darüber hinaus betrifft die Erfindung ein Verfahren zum Betreiben eines solchen Fahrgeschäfts.

Insbesondere aufgrund der steigenden Prozessorleistung von Computern und der steigenden drahtlos übertragbaren Datenmengen kann das Konzept der virtuellen Realität (VR) auf immer mehr Anwendungsbereiche übertragen werden. Ein hervorzuhebender Anwendungsbereich stellen Fahrgeschäfte dar, die es in besonders umfangreicher Weise ermöglichen, Bewegungen, die in der virtuellen Realität stattfinden, mit realen Bewegungen zu verknüpfen, wodurch eine besonders weitgehende Immersion und ein entsprechend intensives Fahrerlebnis für den Fahrgast erreicht werden. Derartige Fahrgeschäfte sind beispielsweise aus der EP 2 138 213 B1, der JP 2001 062 154 A, der US 6 179 619 B1 und der EP 3 041 591 B1 bekannt.

Um die virtuelle Realität dem Fahrgast zugänglich zu machen, werden typischerweise Head-Mounted-Displays wie VR-Brillen verwendet, die in vielen Fällen drahtlos mit VR-Einrichtungen kommunizieren, welche die virtuelle Realität erzeugen. Es ist aber auch durchaus möglich, dass die VR-Einrichtung in das Head-Mounted-Display integriert ist. Die Head-Mounted-Displays werden üblicherweise von den Fahrgeschäften vor Beginn der Fahrt an die Fahrgäste ausgegeben und nach Abschluss der Fahrt wieder eingesammelt. Die Ausgabe und das Einsammeln der Head-Mounted-Displays erfolgt dabei in einem Bahnhof des Fahrgeschäfts, in welchem die Fahrgäste in das Fahrzeug einsteigen und wieder aus dem Fahrzeug aussteigen. Nachdem die Fahrgäste in das Fahrzeug eingestiegen sind, müssen die Head-Mounted-Displays mit der virtuellen Realität synchronisiert werden, damit die virtuelle Realität mit der aktuellen Position und der aktuellen Ausrichtung des Head-Mounted-Displays übereinstimmt und eine zufriedenstellende Immersion gewährleistet ist. Da der Fahrgast das Head-Mounted-Display auf seinen Kopf aufsetzt, entsprechen die Position des Head-Mounted-Displays der Position des Fahrgasts und die Ausrichtung des Head-Mounted-Displays der Ausrichtung des Kopfes des Fahrgasts.

Die Synchronisierung wird bei bekannten Fahrgeschäften dadurch vorgenommen, den Fahrgast in eine bestimmte Richtung, meistens in Fahrtrichtung, blicken zu lassen und dabei die Darstellung der virtuellen Realität auf dem Head-Mounted-Display zu starten. Die Position und die Ausrichtung des Head-Mounted-Displays bei der Synchronisierung werden dabei als Referenz verwendet. Die Darstellung der virtuellen Realität in Abhängigkeit der Position und der Ausrichtung des Head-Mounted-Displays während der Fahrt beziehen sich daher auf die Position und die Ausrichtung des Head-Mounted-Displays bei der Synchronisierung. Je genauer sich die tatsächliche und die von der VR-Einrichtung beim Erzeugen der virtuellen Realität angenommene Position und die Ausrichtung des Head-Mounted-Displays übereinstimmen, desto höher die Immersion. Hierzu sollen die Fahrgäste bei der Synchronisierung einen bestimmten Punkt fixieren, wobei sie den Kopf in Fahrtrichtung halten sollen. Die exakte Ausrichtung des Kopfes bei der Synchronisierung kommt dabei eine entscheidende Bedeutung zu. Um dies zu erreichen, ist meist eine Erklärung oder eine Einweisung durch das Personal notwendig. Dennoch können Fehlbedienungen nicht ausgeschlossen werden, wodurch mehrere Synchronisierungen durchgeführt werden müssen. Folglich ist die Synchronisierung mit einem erhöhten Personal- und Zeitaufwand verbunden.

Weiteren Stand der Technik bilden US 2017 / 072 316 A, DE 10 2015 100 943 A1, US 2017 / 080 349 A1 und WO 2017 / 153 532 A1.

Aufgabe einer Ausführungsform und einer Ausbildung der vorliegenden Erfindung ist es daher, eine Abhilfe für die oben beschriebene Situation zu schaffen und insbesondere eine Synchronisierungsvorrichtung und ein Fahrgeschäft zu schaffen, mit welchen eine Synchronisierung eines Head-Mounted-Displays mit der virtuellen Realität unabhängig von der Ausrichtung des Kopfes des Fahrgasts ermöglicht wird. Darüber hinaus liegt eine Ausgestaltung der Erfindung die Aufgabe zugrunde, ein Verfahren bereitzustellen, welches eine Synchronisierung eines Head-Mounted-Displays mit der virtuellen Realität unabhängig von der Ausrichtung des Kopfes des Fahrgasts ermöglicht.

Diese Aufgabe wird mit den in den Ansprüchen 1, 8 und 11 angegebenen Merkmalen gelöst. Vorteilhafte Ausführungsformen sind Gegenstand der Unteransprüche.

Eine Ausführungsform der Erfindung betrifft eine Synchronisierungsvorrichtung zum Synchronisieren von Head-Mounted-Displays in einem Fahrgeschäft, umfassend zumindest ein Head-Mounted-Display, mit welchem eine von einer VR-Einrichtung erzeugte virtuelle Realität darstellbar ist, und eine Display-Positionserfassungseinrichtung zum Erfassen der Position und Ausrichtung des Head-Mounted-Displays, wobei die Synchronisierungsvorrichtung derart eingerichtet ist, dass die virtuelle Realität mit dem Head-Mounted-Display unter Berücksichtigung der von der Display-Positionserfassungseinrichtung erfassten Position und Ausrichtung des Head-Mounted-Displays synchronisiert wird, sobald ein wählbares Startkriterium erfüllt ist.

Die Display-Positionserfassungseinrichtung ist in der Lage, quasikontinuierlich die Position und die Ausrichtung des Head-Mounted-Displays zu bestimmen. Sobald das Startkriterium erfüllt ist, wird die virtuelle Realität mit der Ausrichtung und der Position des Head-Mounted-Displays synchronisiert. Im einfachsten Fall ist das Startkriterium die Inbetriebnahme des Head-Mounted-Displays. Folglich stimmen beim Synchronisieren die tatsächliche und die beim Erzeugen der virtuellen Realität angenommene Position und die Ausrichtung des Head-Mounted-Displays in ausreichendem Maße überein. Sobald die Synchronisierung des Head-Mounted-Displays mit der virtuellen Realität vorgenommen worden ist, wird die aktuelle Position und die aktuelle Ausrichtung des Head-Mounted-Displays und folglich die des Benutzers auf die Position und die Ausrichtung des Head-Mounted-Displays zum Zeitpunkt der Synchronisierung bezogen.

Die Ausrichtung des Head-Mounted-Displays kann mittels heutzutage in sehr großen Stückzahlen beispielsweise in Smartphones verbauten Komponenten wie Gyro-, Beschleunigungs- und/oder Magnetsensoren ermittelt werden.

Die Synchronisierung erfolgt unabhängig von der Ausrichtung und der Position des Kopfes des Benutzers. Die mit der vorschlagsgemäßen Synchronisierungsvorrichtung erreichbare Immersion ist reproduzierbar hoch. Da die Mithilfe des Benutzers bei der Synchronisierung nicht erforderlich ist, kann die Synchronisierung schneller und ohne die Gefahr von Fehlbedienungen durchgeführt werden. Je nach Ausgestaltung kommunizieren die Synchronisierungsvorrichtung und/oder das Head-Mounted-Display insbesondere drahtlos mit einer externen VR-Einrichtung, welche die virtuelle Realität erzeugt, oder die VR-Einrichtung ist in das Head-Mounted-Display integriert.

Nach Maßgabe einer weiteren Ausführungsform ist die Display-Positionserfassungseinrichtung derart eingerichtet, dass sie einen Synchronisierungsbereich definiert und das Startkriterium dann erfüllt ist, wenn sich das Head-Mounted-Display innerhalb des Synchronisierungsbereichs befindet. Wie bereits erwähnt, kann die Display-Positionserfassungseinrichtung quasikontinuierlich beginnend mit ihrer Inbetriebnahme die Position und die Ausrichtung des Head-Mounted-Displays erfassen. Die hierzu notwendige Rechenleistung, die von der Display-Positionserfassungseinrichtung erbracht werden muss, ist jedoch verhältnismäßig hoch. Zudem ist es nicht notwendig, die Position und die Ausrichtung des Head-Mounted-Displays im gesamten Fahrgeschäft zu erfassen. Vielmehr genügt es, wenn dies innerhalb eines Synchronisierungsbereichs geschieht, der beispielsweise mit einem Bahnhof oder einem Fahrgeschäft zusammenfällt. In dieser Ausführungsform wird die Synchronisierung dann vorgenommen, sobald der Fahrgast in den Synchronisierungsbereich eindringt. Die Synchronisierungsvorrichtung kann in dieser Ausführungsform energieeffizient betrieben werden, ohne dass Nachteile für den Fahrgast entstehen oder die Immersion beeinträchtigt wird.

In einer weitergebildeten Ausführungsform kann das Head-Mounted-Display eine Schalteinrichtung umfassen, welche ein Signal erzeugt und an die Synchronisierungsvorrichtung sendet, wenn der Fahrgast das Head-Mounted-Display aufsetzt und das Startkriterium dann erfüllt ist, wenn die Synchronisierungsvorrichtung dieses Signal empfängt. Die Schalteinrichtung kann beispielsweise ein Druckschalter sein, den der Fahrgast beim Aufsetzen des Head-Mounted-Displays betätigt. Alternativ kann die Schalteinrichtung auf den Kontakt mit der Haut des Fahrgasts reagieren. Auch in diesem Fall werden die Ausrichtung und die Position des Head-Mounted-Displays nicht ständig erfasst. In diesem Fall werden die Ausrichtung und die Position des Head-Mounted-Displays erst dann bestimmt, wenn der Fahrgast das Head-Mounted-Display aufzieht. Erst danach wird die Synchronisierung durchgeführt, wodurch die Synchronisierungsvorrichtung energieeffizient betrieben werden kann, ohne dass Nachteile für den Fahrgast entstehen oder die Immersion beeinträchtigt wird.

Bei einer weitergebildeten Ausführungsform kann die Synchronisierungsvorrichtung eine Basisstation zum Ablegen des Head-Mounted-Displays umfassen und das Startkriterium dann erfüllt sein, sobald die Display-Positionserfassungseinrichtung erkennt, dass das Head-Mounted-Display von der Basisstation entnommen wird. Die Basisstation kann in Fahrgeschäften zum Lagern der Head-Mounted-Displays dienen. Sobald das betreffende Head-Mounted-Display aus der Basisstation entnommen wurde, kann davon ausgegangen werden, dass das Head-Mounted-Display von einem Fahrgast verwendet werden wird. Erst dann wird die Synchronisierung durchgeführt. Folglich kann die Synchronisierungsvorrichtung auch in dieser Ausführungsform energieeffizient betrieben werden, ohne dass Nachteile für den Fahrgast entstehen oder die Immersion beeinträchtigt wird.

Bei einer weiteren Ausführungsform kann die Basisstation Präsenzerkennungsmittel aufweisen, mit denen erkennbar ist, ob das Head-Mounted-Display in der Basisstation abgelegt ist und wann das Head-Mounted-Display von der Basisstation entnommen wird. Zwar kann auch die Display-Positionserfassungseinrichtung erkennen, dass das Head-Mounted-Display von der Basisstation entnommen wird, hierzu muss sie aber immer aktiviert sein. Das Präsenzerkennungsmittel kann beispielsweise einen Reed-Kontakt umfassen, der mit der Entnahme des Head-Mounted-Displays von der Basisstation schaltet und hierdurch die Synchronisierungsvorrichtung und die Display-Positionserfassungseinrichtung aktiviert. Die Synchronisierungsvorrichtung lässt sich daher energieeffizienter und mit einem geringeren Datenvolumen betreiben.

Eine weitergebildete Ausführungsform zeichnet sich dadurch aus, dass die Basisstation eine Ladeeinrichtung zum Aufladen des Head-Mounted-Displays aufweist. Die Ladeeinrichtung kann so ausgestaltet sein, dass beim Ablegen des Head-Mounted-Displays in die Basisstation ein Kontakt zur Spannungsquelle erzeugt wird. Hierdurch wird sichergestellt, dass das Head-Mounted-Display immer ausreichend geladen ist, ohne dass zusätzliche Schritte zum Aufladen des Head-Mounted-Displays durchgeführt werden müssen. Die Ladeinrichtung kann auch als Präsenzerkennungsmittel verwendet werden, da eine Entnahme aus der Ladeeinrichtung erkannt und diese Information wie beschrieben verwendet werden kann.

In einer weiteren Ausführungsform ist die Display-Positionserfassungseinrichtung mit Zuordnungsmitteln ausgestattet, welche die eindeutige Zuordnung der Head-Mounted Displays ermöglichen. Die Zuordnungsmittel können beispielsweise optischer Art sein und ermöglichen eine eindeutige Zuordnung bei der Synchronisierung.

Eine Zuordnung der einzelnen Head-Mounted-Displays und eine Synchronisierung dieser können ebenfalls über eine zeitliche Intervallschaltung erfolgen. Dies ist beispielsweise möglich, wenn die Head-Mounted-Displays kurz intervallverzögert eingeschaltet werden. Der Synchronisierungsvorrichtung ist es dadurch möglich, jedes Head-Mounted-Display genau zu erkennen und diesem die genaue Position im Raum zu ermitteln und die entsprechend ausgerichtete virtuelle Realität auf dem Head-Mounted-Display zu erzeugen. Es können mehrere virtuelle Realitäten angeboten werden, zwischen denen die Fahrgäste wählen können. Damit die ausgewählte virtuelle Realität wie ausgewählt angezeigt wird, muss eine eindeutige Zuordnung der Head-Mounted-Displays gewährleistet sein.

Nach Maßgabe einer weiteren Ausführungsform umfassen die Zuordnungsmittel auf dem Head-Mounted-Display angeordnete Marker. Die Marker dienen dazu, ein sogenanntes "outside-intracking" zu realisieren, bei dem ein Positionssensor getrennt und außerhalb von den Head-Mounted-Displays angeordnet ist. Der Positionssensor kann die Bewegung der Marker verfolgen, wodurch die Position des Head-Mounted-Displays gut ermittelt werden kann. Als Marker können unter anderem LEDs, auf Bluetooth Low Energy (BLE) basierende Sender, auch als Beacons bezeichnet, oder QR-Codes verwendet werden. In allen Fällen können die Marker einen eindeutigen Identifikationscode an die Display-Positionserfassungseinrichtung senden, so dass eine eindeutige Zuordnung der Head-Mounted-Displays ermöglicht wird. Beispielsweise können die LEDs mit einem bestimmten Blinkmuster betrieben werden, welches eine eindeutige Identifikation des betreffenden Head-Mounted-Displays ermöglicht. Das Blinkmuster kann so gestaltet werden, dass es für das menschliche Auge als Dauerleuchten wahrgenommen wird.

Eine Ausbildung der Erfindung betrifft ein Fahrgeschäft, insbesondere Achterbahn, umfassend eine Fahrstrecke, auf der zumindest ein Fahrzeug beweglich angeordnet ist, wobei das Fahrzeug zur Aufnahme zumindest eines Fahrgasts ausgebildet ist, eine VR-Einrichtung, mit welcher eine einer Fahrt des Fahrgasts mit dem Fahrzeug entlang der Fahrstrecke entsprechende virtuelle Realität erzeugbar ist, die auf einem dem Fahrgast zugeordneten Head-Mounted-Display darstellbar ist, eine Fahrzeug-Positionserfassungseinrichtung zum Erfassen der Position des Fahrzeugs auf der Fahrstrecke, und eine Synchronisierungsvorrichtung nach einem der vorherigen Ausführungsformen, die derart eingerichtet ist, dass die virtuelle Realität mit dem Head-Mounted-Display unter Berücksichtigung der von der Display-Positionserfassungseinrichtung erfassten Position und Ausrichtung des Head-Mounted-Displays und der Position des Fahrzeugs auf der Fahrstrecke synchronisiert wird, sobald ein wählbares Startkriterium erfüllt ist.

Die technischen Effekte und Vorteile, die sich mit dem vorschlagsgemäßen Fahrgeschäft erreichen lassen, entsprechen denjenigen, die für die vorliegende Synchronisierungsvorrichtung erörtert worden sind. Aufgrund der Tatsache, dass die Synchronisierung des Head-Mounted-Displays mit der virtuellen Realität unabhängig vom Verhalten des Fahrgasts durchgeführt wird, können entsprechende Erläuterungen und Einweisungen entfallen. Fehlbedienungen und erneute Synchronisierungen können vermieden werden, wodurch das Fahrgeschäft mit einem höheren Durchsatz betrieben werden kann. Zudem sinkt der Personalaufwand, so dass das vorschlagsgemäße Fahrgeschäft im Vergleich zu herkömmlichen derartigen Fahrgeschäften deutlich wirtschaftlicher betrieben werden können.

Bei einer weitergeführten Ausbildung der Erfindung ist vorgesehen, dass das Fahrzeug zumindest zwei Fahrgastaufnahmen zum Aufnehmen jeweils eines Fahrgasts aufweist und jeder Fahrgastaufnahme ein Head-Mounted-Display zugeordnet ist. Um eine hohe Immersion zu erreichen, muss auch die Position des Head-Mounted-Displays und folglich des Fahrgasts in Bezug auf das Fahrzeug berücksichtigt werden. Insbesondere bei langen Fahrzeugen durchfahren die Fahrgäste, die in der ersten Reihe sitzen, einen bestimmten Streckenabschnitt früher als Fahrgäste, die in der letzten Reihe sitzen. Diese zeitliche Differenz muss bei den für die jeweiligen Fahrgäste dargestellten virtuellen Realitäten berücksichtigt werden. Zwar kann die Display-Positionserfassungseinrichtung auch die Position des Displays in Bezug auf das Fahrzeug ermitteln, allerdings hat die Zuordnung eines Head-Mounted-Displays zu einer Fahrgastaufnahme den Vorteil, dass diese Ermittlung entfallen kann. Die Rechenleistung, die von der Display-Positionserfassungseinrichtung verrichtet werden muss, lässt sich verringern.

In einer weiteren Ausbildung kann die VR-Einrichtung derart eingerichtet sein, dass eine der Position und der Ausrichtung des Head-Mounted-Displays außerhalb des Fahrzeugs entsprechende virtuelle Realität erzeugbar und auf dem dem Fahrgast zugeordneten Head-Mounted-Display darstellbar ist. In dieser Ausbildung ist die virtuelle Realität nicht nur auf die Fahrstrecke begrenzt. Vielmehr können auch die an die Fahrstrecke angrenzenden Bereiche des Fahrgeschäfts mit in die virtuelle Realität eingebunden werden. Das Erlebnis für den Fahrgast wird hierdurch gesteigert und eventuelle Wartezeiten können auf für den Fahrgast unterhaltsame Weise überbrückt werden. Zudem kann die virtuelle Realität so eingerichtet sein, dass ein bestimmter Fahrgast, welcher ein bestimmtes Head-Mounted-Display trägt, zu einer bestimmten Fahrgastaufnahme geleitet wird. In einigen Fahrgeschäften sind einige Fahrgastaufnahmen nicht für alle Fahrgäste zugänglich. Beispielsweise gehbehinderte Fahrgäste, die Unterstützung beim Ein- und Ausssteigen benötigen und über Rampen zum Bahnhof geführt werden sollen, können mit einem entsprechend identifizierten Head-Mounted-Display auf einem bestimmten Weg zu einer bestimmten Fahrgastaufnahme geleitet werden, wo ein Mitarbeiter des Fahrgeschäfts dem Fahrgast behilflich sein kann.

Eine Ausgestaltung der Erfindung betrifft ein Verfahren zum Betreiben insbesondere eines Fahrgeschäfts wie einer Achterbahn, nach einem der zuvor erörterten Ausbildungen, mit einer Synchronisierungsvorrichtung nach einem der oben diskutierten Ausführungsformen, umfassend folgende Schritte:
- Erzeugen einer einer Fahrt eines Fahrgasts mit dem Fahrzeug entlang der Fahrstrecke entsprechenden virtuellen Realität mittels einer VR-Einrichtung,
- Erfassen der Position des Fahrzeugs auf der Fahrstrecke mittels einer Fahrzeug-Positionserfassungseinrichtung,
- Erfassen der Position und Ausrichtung des Head-Mounted-Displays mittels einer Display-Positionserfassungseinrichtung,
- Darstellen der virtuellen Realität auf einem dem Fahrgast zugeordneten Head-Mounted-Display,
- Synchronisieren der virtuellen Realität mit der Position und der Ausrichtung des Head-Mounted-Displays, sobald ein wählbares Startkriterium erfüllt ist, wobei die virtuelle Realität unter Berücksichtigung der Position des Fahrzeugs auf der Fahrstrecke und der Position und der Ausrichtung des Head-Mounted-Displays auf dem Head-Mounted-Display dargestellt wird.

Die technischen Effekte und Vorteile, die sich mit dem vorschlagsgemäßen Verfahren erreichen lassen, entsprechen denjenigen, die für das vorliegende Fahrgeschäft erörtert worden sind. Aufgrund der Tatsache, dass die Synchronisierung des Head-Mounted-Displays mit der virtuellen Realität unabhängig vom Verhalten des Fahrgasts durchgeführt wird, entfallen entsprechende Erläuterungen und Einweisungen. Fehlbedienungen und erneute Synchronisierungen können vermieden werden, wodurch das Fahrgeschäft mit einem höheren Durchsatz betrieben werden kann. Zudem sinkt der Personalaufwand, so dass das vorschlagsgemäße Fahrgeschäft deutlich wirtschaftlicher im Vergleich zu herkömmlichen derartigen Fahrgeschäften betrieben werden können.

An dieser Stelle sei darauf hingewiesen, dass die vorliegende Synchronisierungsvorrichtung und das vorschlagsgemäße Verfahren auch unabhängig von einem Fahrgeschäft eingesetzt werden können. Die vorliegende Synchronisierungsvorrichtung und das vorschlagsgemäße Verfahren können in Themenparks, Fitnessstudios oder Escape-Rooms von Freizeit-und Games-Zentren eingesetzt werden, wie es beispielsweise in der WO 2013/050473 A1 gezeigt ist.

In einer weiteren Ausgestaltung kann das Verfahren folgende Schritte umfassen:
- Definieren eines Synchronisierungsbereichs mittels der Display-Positionserfassungseinrichtung, und
- Synchronisieren der virtuellen Realität mit der Position und der Ausrichtung des Head-Mounted-Displays, wenn sich das Head-Mounted-Display innerhalb des Synchronisierungsbereichs befindet, wodurch das Startkriterium erfüllt ist.

Wie bereits erwähnt, kann die Display-Positionserfassungseinrichtung quasikontinuierlich beginnend mit ihrer Inbetriebnahme die Position und die Ausrichtung des Head-Mounted-Displays erfassen. Die hierzu notwendige Rechenleistung, die von der Display-Positionserfassungseinrichtung erbracht werden muss, ist jedoch verhältnismäßig hoch. Zudem ist es nicht notwendig, die Position und die Ausrichtung des Head-Mounted-Displays im gesamten Fahrgeschäft zu erfassen. Vielmehr genügt es, wenn dies innerhalb eines Synchronisierungsbereichs geschieht, der beispielsweise mit einem Bahnhof oder einem Fahrgeschäft zusammenfällt. In dieser Ausführungsform wird die Synchronisierung dann vorgenommen, sobald der Fahrgast in den Synchronisierungsbereich eindringt. Die Synchronisierungsvorrichtung kann in dieser Ausführungsform energieeffizient betrieben werden, ohne dass Nachteile für den Fahrgast entstehen oder die Immersion beeinträchtigt wird.

In einer weitergebildeten Ausgestaltung kann das Verfahren folgende Schritte umfassen:
- Erzeugen eines Signals mittels einer am Head-Mounted-Display angeordneten Schalteinrichtung, wenn der Fahrgast das Head-Mounted-Display aufsetzt und
- Senden dieses Signals an die Synchronisierungsvorrichtung, wobei das Startkriterium dann erfüllt ist, wenn die Synchronisierungsvorrichtung dieses Signal empfängt.

Die Schalteinrichtung kann beispielsweise ein Druckschalter sein, den der Fahrgast beim Aufsetzen des Head-Mounted-Displays betätigt. Alternativ kann die Schalteinrichtung auf den Kontakt mit der Haut des Fahrgasts reagieren. Auch in diesem Fall werden die Ausrichtung und die Position des Head-Mounted-Displays nicht ständig erfasst. In diesem Fall werden die Ausrichtung und die Position des Head-Mounted-Displays erst dann bestimmt, wenn der Fahrgast das Head-Mounted-Display aufzieht. Erst danach wird die Synchronisierung durchgeführt, wodurch die Synchronisierungsvorrichtung energieeffizient betrieben werden kann, ohne dass Nachteile für den Fahrgast entstehen oder die Immersion beeinträchtigt wird.

Die Synchronisierungsvorrichtung kann sich in einer vorteilhaften Ausgestaltungsform auch innerhalb des Head-Mounted-Displays befinden. Es ist aber auch denkbar, dass sich die Synchronisierungsvorrichtung gänzlich außerhalb des Fahrgeschäftes beispielsweise in einem Rechenzentrum befindet, oder aber beispielsweise auch in einem Fahrzeug integriert ist.

In einer weitergebildeten Ausgestaltung kann das Verfahren folgende Schritte umfassen:
- Darstellen der virtuellen Realität auf dem Head-Mounted-Display, sobald die Fahrzeug-Positionserfassungseinrichtung erkennt, dass sich das Fahrzeug entlang der Fahrstrecke bewegt, wodurch das Startkriterium erfüllt ist.

Zwar kann auch die Display-Positionserfassungseinrichtung erkennen, dass sich das Fahrzeug mit dem Head-Mounted-Display entlang der Fahrstrecke bewegt, allerdings kann die hierfür von der Display-Positionserfassungseinrichtung zu verrichtende Rechenleistung reduziert werden, wenn die Bewegung des Fahrzeugs entlang der Fahrstrecke von der Fahrzeug-Positionserfassungseinrichtung erkannt wird. Die Fahrzeug-Positionserfassungseinrichtung kann hierzu auch das von der Steuerung oder vom Operator des Fahrgeschäfts ausgegebene Startsignal für das Fahrzeug für den Beginn der Darstellung der virtuellen Realität verwenden.

In einer fortentwickelten Ausgestaltung kann das Verfahren folgende Schritte umfassen:
- Ablegen des Head-Mounted-Displays auf einer Basisstation, und
- Synchronisieren der virtuellen Realität mit der Position und der Ausrichtung des Head-Mounted-Displays, sobald die Display-Positionserfassungseinrichtung erkennt, dass das Head-Mounted-Display von der Basisstation entnommen wird, wodurch das Startkriterium erfüllt ist.

Die Basisstation kann in Fahrgeschäften zum Lagern der Head-Mounted-Displays dienen. Sobald das betreffende Head-Mounted-Display aus der Basisstation entnommen wurde, kann davon ausgegangen werden, dass das Head-Mounted-Display von einem Fahrgast verwendet werden wird. Erst dann wird die Synchronisierung durchgeführt. Folglich kann die Synchronisierungsvorrichtung auch in dieser Ausführungsform energie-effizient betrieben werden, ohne dass Nachteile für den Fahrgast entstehen oder die Immersion beeinträchtigt wird.

Beispielhafte Ausführungsformen der Erfindung werden im Folgenden unter Bezugnahme auf die beigefügten Zeichnungen näher erläutert. Es zeigen
- Figur 1: ein Fahrgeschäft mit einer ersten Ausführungsform einer erfindungsgemäßen Synchronisierungsvorrichtung anhand einer prinzipiellen Draufsicht,
- Figur 2: ein Fahrgast, welcher ein Head-Mounted-Display trägt, ebenfalls anhand einer prinzipiellen Draufsicht, und
- Figur 3: ein Ablaufdiagramm zum Darstellen der Schritte einer Ausführungsform eines erfindungsgemäßen Verfahrens zum Betreiben eines Fahrgeschäfts.

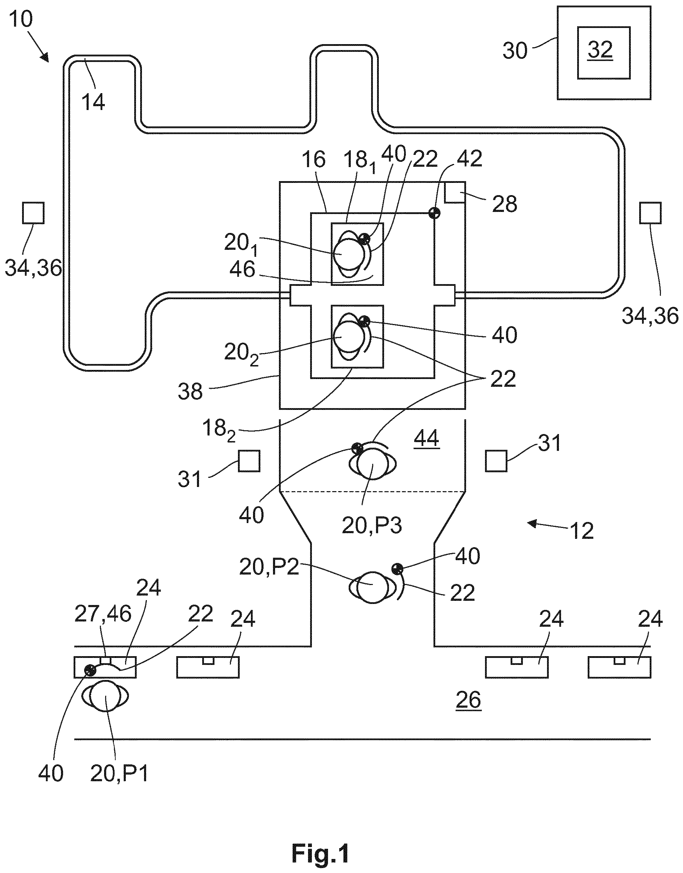

In Figur 1 ist ein Fahrgeschäft 10 mit einer erfindungsgemäßen Synchronisierungsvorrichtung 12 anhand einer prinzipiellen Darstellung gezeigt. Das Fahrgeschäft 10 umfasst eine Fahrstrecke 14, entlang welcher ein Fahrzeug 16 mittels nicht dargestellter Antriebsmittel bewegt werden kann. Selbstverständlich kann das Fahrgeschäft 10 mehr als ein Fahrzeug 16 aufweisen. Im dargestellten Ausführungsbeispiel handelt es sich beim Fahrgeschäft 10 um eine Achterbahn. Das Fahrzeug 16 weist eine erste Fahrgastaufnahme 18₁ und eine zweite Fahrgastaufnahme 18₂ auf, in welchen ein erster Fahrgast 20₁ bzw. ein zweiter Fahrgast 20₂ aufgenommen werden können.

Das Fahrgeschäft 10 weist einen Bahnhof 38 auf, der von der Fahrstrecke 14 durchlaufen wird und in welchem das Fahrzeug 16 angehalten und wieder gestartet wird. Die Fahrgäste 20 können im Bahnhof 38 in das Fahrzeug 16 einsteigen und wieder aussteigen.

Die Synchronisierungsvorrichtung 12 umfasst zumindest ein Head-Mounted-Display 22, mit welchem eine virtuelle Realität darstellbar ist. Weiterhin weist die Synchronisierungsvorrichtung 12 eine Basisstation 24 zum Ablegen des Head-Mounted-Displays 22, auf. Für jedes Head-Mounted-Display 22 ist je eine Basisstation 24 vorgesehen, die in einem Wartebereich 26 außerhalb des Bahnhofs 38 angeordnet sind. Die Basisstationen 24 verfügen über eine Ladeeinrichtung 27, mit der die Head-Mounted-Displays 22 aufgeladen werden können, sobald sie in der Basisstation 24 abgelegt sind.

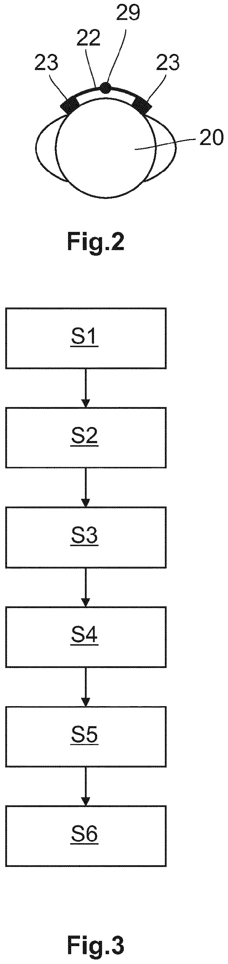

Darüber hinaus umfasst die Synchronisierungsvorrichtung 12 eine Display-Positionserfassungseinrichtung 28, mit der die Position und die Ausrichtung des Head-Mounted-Displays 22 erfasst werden kann. Wie insbesondere aus der Figur 2 hervorgeht, weist das Head-Mounted-Display 22 ein als Marker 29 ausgestaltetes Zuordnungsmittel 29 auf, das beispielsweise als eine LED, ein QR-Code oder dergleichen ausgebildet sein kann. Hierdurch ist jedes der im Fahrgeschäft verwendeten Head-Mounted-Displays 22 eindeutig identifizierbar und ermöglicht die Positionserfassung der Head-Mounted-Displays 22. Im dargestellten Ausführungsbeispiel wird ein sogenanntes "outside-intracking" eingesetzt, bei dem eine Anzahl von Positionssensoren 31 getrennt und außerhalb von den Head-Mounted-Displays 22 angeordnet ist (siehe Figur 1). Die Positionssensoren 31 können die Bewegung der Marker 29 verfolgen, wodurch die Position des Head-Mounted-Displays 22 errechnet werden kann.

Nicht dargestellt sind im Head-Mounted-Display 22 verbaute Komponenten wie Gyro-, Beschleunigungs- und/oder Magnetsensoren, mit denen die Ausrichtung des Head-Mounted-Displays 22 ermittelt werden kann.

Weiterhin weist das Head-Mounted-Display 22 eine Schalteinrichtung 23 auf, mit welcher erkennbar ist, ob der Fahrgast 12 das Head-Mounted-Display 22 aufgesetzt hat oder nicht.

Das Fahrgeschäft 10 umfasst ferner eine VR-Einrichtung 30, mit welcher eine virtuelle Realität erzeugt werden kann. Hierzu weist die VR-Einrichtung 30 eine Recheneinheit 32 auf. Die VR-Einrichtung 30 kommuniziert drahtlos mit der Synchronisierungsvorrichtung 12 und dem Head-Mounted-Display 22, welches der Fahrgast 20 vergleichbar mit einer Brille trägt.

Weiterhin ist das Fahrgeschäft 10 mit einer Fahrzeug-Positionserfassungseinrichtung 34 ausgerüstet, die zum Erfassen der Position des Fahrzeugs 16 auf der Fahrstrecke 14 dient. Die Fahrzeug-Positionserfassungseinrichtung 34 weist Streckensensoren 36 auf, mit denen die Position des Fahrzeugs 16 auf der Fahrstrecke 14 erfasst und zur Recheneinheit 32 übermittelt wird, welche die Position des Fahrzeugs 16 auf der Fahrstrecke 14 beim Erzeugen der virtuellen Realität berücksichtigt.

Die Position und die Ausrichtung des Head-Mounted-Displays 22 können mit einem ersten Koordinatensystem 40 beschrieben werden, während die Bewegung und die Ausrichtung des Fahrzeugs 16 mit einem zweiten Koordinatensystem 42 beschrieben werden können.

Das Fahrgeschäft wird auf folgende Weise betrieben: In Figur 1 ist erkennbar, dass die Head-Mounted-Displays 22 in jeweils einer Basisstation 24 abgelegt sind. Ein sich in einer ersten Position P1 befindlicher Fahrgast 20 kann eines der Head-Mounted-Display 22 von der Basisstation 24 entnehmen und anschließend in Richtung des Bahnhofs 38 laufen. Dabei muss er das Head-Mounted-Display 22 nicht aufziehen, wie es bei dem sich in einer zweiten Position P2 befindenden Fahrgast 20 der Fall ist. In einer dritten Position P3 hat der Fahrgast 20 das Head-Mounted-Display 22 aufgesetzt. Die dritte Position P3 befindet sich innerhalb eines Synchronisierungsbereichs 44. Sobald die Display-Positionserfassungseinrichtung 28 erkennt, dass sich das Head-Mounted-Display 22 innerhalb des Synchronisierungsbereichs 44 befindet, wird das Head-Mounted-Display 22 mit der von der VR-Einrichtung 30 erzeugten virtuellen Realität synchronisiert. Zu diesem Zeitpunkt werden die Position und die Ausrichtung des Head-Mounted-Displays 22 in Bezug auf die Position und die Ausrichtung des Fahrzeugs gesetzt. Mit anderen Worten werden das erste Koordinatensystem 40 und das zweite Koordinatensystem 42 in ein Referenzverhältnis zueinander gesetzt. Änderungen der Ausrichtung und der Position des Fahrzeugs 26 und des Head-Mounted-Displays 22 werden auf dieses Referenzverhältnis bezogen.

Alternativ kann die Basisstation ein Präsenzerkennungsmittel 46 aufweisen, welches erkennt, ob das Head-Mounted-Display 22 in der Basisstation 24 abgelegt ist oder nicht. Wenn es von der Basisstation 24 entnommen wird, kann dieses Ereignis dazu verwendet werden, die Synchronisierung zu starten.

Je nach Ausgestaltung des Fahrgeschäfts 10 kann die virtuelle Realität auf die Fahrstrecke 14 beschränkt sein, so dass diese erst dann angezeigt wird, wenn der Fahrgast 20 in das Fahrzeug 16 eingestiegen ist und ein Startsignal für das Fahrzeug 16 abgebeben worden ist. In diesem Fall wird dem Fahrgast 20 die reale Welt im Head-Mounted-Display 22 angezeigt, solange er sich außerhalb des Fahrzeugs 16 befindet.

Es ist aber auch möglich, dass die virtuelle Realität auch den Synchronisierungsbereich 44 umfasst, so dass dem Fahrgast 20 eine virtuelle Realität bereits dann angezeigt wird, wenn er den Synchronisierungsbereich 44 betritt. Bei der über das Fahrzeug hinausgehenden virtuellen Realität werden Hindernisse der realen Welt in der virtuellen Realität so dargestellt, dass von diesen keine Gefahr für den Fahrgast 20 darstellen, der das Head-Mounted-Display 22 aufgesetzt hat.

In Figur 3 ist eine Ausführungsform des erfindungsgemäßen Verfahrens zum Betreiben eines Fahrgeschäfts 10 anhand eines Ablaufdiagramms dargestellt. In diesem Ausführungsbeispiel wird die Display-Positionserfassungseinrichtung 28 mit der Inbetriebnahme aktiviert. In einem ersten Schritt S1 erfasst die Display-Positionserfassungseinrichtung 28 die Ausrichtung und die Position des Head-Mounted-Display 22 in Bezug zu der Ausrichtung und Position des Fahrzeugs, wenn sich das Head-Mounted-Display 22 in der Basisstation 24 befindet. Mit anderen Worten werden das erste Koordinatensystem 40 und das zweite Koordinatensystem 42 zum Zeitpunkt der Synchronisierung definiert und in ein Referenzverhältnis zueinander gesetzt, welches sich bis zur nächsten Inbetriebnahme nicht mehr ändert. Anschließend entnimmt der Fahrgast 20 in einem zweiten Schritt S2 das Head-Mounted-Display 22 von der Basisstation 24. Gemäß einem dritten Schritt S3 erfasst die Display-Positionserfassungseinrichtung 28 quasikontinuierlich die Position und die Ausrichtung des Head-Mounted-Displays 22, so dass die Bewegung des Head-Mounted-Displays 22 aufgezeichnet werden kann. In einem vierten Schritt S4 setzt der Fahrgast 20 das Head-Mounted-Display 22 auf, was durch die Schalteinrichtung 23 registriert wird. Zu diesem Zeitpunkt wird gemäß einem fünften Schritt S5 die Ausrichtung und die Position des Head-Mounted-Displays 22 erneut bestimmt und nach einem sechsten Schritt S6 die virtuelle Realität unter Berücksichtigung der Position des Fahrzeugs auf der Fahrstrecke und der Position und der Ausrichtung des Head-Mounted-Displays 22 auf dem Head-Mounted-Display 22 dargestellt.

### Bezugszeichenliste

- 10: Fahrgeschäft
- 12: Synchronisierungsvorrichtung
- 14: Fahrstrecke
- 16: Fahrzeug
- 18: Fahrgastaufnahme
- 18₁: erste Fahrgastaufnahme
- 18₂: zweite Fahrgastaufnahme
- 20: Fahrgast
- 20₁: erster Fahrgast
- 20₂: zweiter Fahrgast
- 22: Head-Mounted-Display
- 23: Schalteinrichtung
- 24: Basisstation
- 26: Wartebereich
- 27: Ladeeinrichtung
- 28: Display-Positionserfassungseinrichtung
- 29: Zuordnungsmittel, Marker
- 30: VR-Einrichtung
- 31: Positionssensor
- 32: Recheneinheit
- 34: Fahrzeug-Positionserfassungseinrichtung
- 36: Streckensensor
- 38: Bahnhof
- 40: erstes Koordinatensystem
- 42: zweites Koordinatensystem
- 44: Synchronisierungsbereich
- 46: Präsenzerkennungsmittel

- P: Position
- S: Schritte

## Patentansprüche

1. Synchronisierungsvorrichtung zum Synchronisieren von Head-Mounted-Displays (22) mit einer virtuellen Welt insbesondere in einem Fahrgeschäft (10), umfassend
- zumindest ein Head-Mounted-Display (22), mit welchem eine von einer VR-Einrichtung (30) erzeugte virtuelle Realität darstellbar ist, und
- eine Display-Positionserfassungseinrichtung (28) zum Erfassen der Position und Ausrichtung des Head-Mounted-Displays (22), wobei
- die Synchronisierungsvorrichtung (12) derart eingerichtet ist, dass die virtuelle Realität mit dem Head-Mounted-Display (22) unter Berücksichtigung der von der Display-Positionserfassungseinrichtung (28) erfassten Position und Ausrichtung des Head-Mounted-Displays (22) synchronisiert wird, sobald ein wählbares Startkriterium erfüllt ist
**dadurchgekennzeichnet**, dass
die Synchronisierungsvorrichtung (12) eine Basisstation (24) zum Ablegen des Head-Mounted-Displays (22) umfasst und das Startkriterium dann erfüllt ist, sobald die Display-Positionserfassungseinrichtung (28) erkennt, dass das Head-Mounted-Display (22) von der Basisstation (24) entnommen wird.

2. Synchronisierungsvorrichtung nach Anspruch 1,
**dadurch gekennzeichnet, dass** die Display-Positionserfassungseinrichtung (28) derart eingerichtet ist, dass sie einen Synchronisierungsbereich (44) definiert und das Startkriterium dann erfüllt ist, wenn sich das Head-Mounted-Display (22) innerhalb des Synchronisierungsbereichs (44) befindet.

3. Synchronisierungsvorrichtung nach einem der Ansprüche 1 oder 2,
**dadurch gekennzeichnet, dass** das Head-Mounted-Display (22) eine Schalteinrichtung (23) umfasst, welche ein Signal erzeugt und an die Synchronisierungsvorrichtung (12) sendet, wenn der Fahrgast das Head-Mounted-Display (22) aufsetzt und das Startkriterium dann erfüllt ist, wenn die Synchronisierungsvorrichtung (12) dieses Signal empfängt.

4. Synchronisierungsvorrichtung nach einem der vorherigen Ansprüche,
**dadurch gekennzeichnet, dass** die Basisstation (24) Präsenzerkennungsmittel (46) aufweisen, mit denen erkennbar ist, ob das Head-Mounted-Display (22) in der Basisstation (24) abgelegt ist und wann das Head-Mounted-Display (22) von der Basisstation (24) entnommen wird.

5. Synchronisierungsvorrichtung nach einem der vorherigen Ansprüche,
**dadurch gekennzeichnet, dass** die Basisstation (24) eine Ladeeinrichtung (27) zum Aufladen des Head-Mounted-Displays (22) aufweist.

6. Synchronisierungsvorrichtung nach einem der vorherigen Ansprüche,
**dadurch gekennzeichnet, dass** die Display-Positionserfassungseinrichtung mit Zuordnungsmitteln (29) ausgestattet ist, welche die eindeutige Zuordnung der Head-Mounted Displays ermöglichen.

7. Synchronisierungsvorrichtung nach einem der vorherigen Ansprüche,
dass die Zuordnungsmittel (29) auf dem Head-Mounted-Display (22) angeordnete Marker (29) umfassen.

8. Fahrgeschäft (10), insbesondere Achterbahn, umfassend
- eine Fahrstrecke (14), auf der zumindest ein Fahrzeug (16) beweglich angeordnet ist, wobei das Fahrzeug (16) zur Aufnahme zumindest eines Fahrgasts (20) ausgebildet ist,
- eine VR-Einrichtung (30), mit welcher eine einer Fahrt des Fahrgasts (20) mit dem Fahrzeug (16) entlang der Fahrstrecke (14) entsprechende virtuelle Realität erzeugbar ist, die auf einem dem Fahrgast (20) zugeordneten Head-Mounted-Display (22) darstellbar ist,
- eine Fahrzeug-Positionserfassungseinrichtung (34) (38) zum Erfassen der Position des Fahrzeugs (16) auf der Fahrstrecke (14), und
- eine Synchronisierungsvorrichtung (12) nach einem der vorherigen Ansprüche, die derart eingerichtet ist, dass die virtuelle Realität mit dem Head-Mounted-Display (22) unter Berücksichtigung der von der Display-Positionserfassungseinrichtung (28) erfassten Position und Ausrichtung des Head-Mounted-Displays (22) und der Position des Fahrzeugs (16) auf der Fahrstrecke (14) synchronisiert wird, sobald ein wählbares Startkriterium erfüllt ist.

9. Fahrgeschäft (10) nach Anspruch 8,
**dadurch gekennzeichnet, dass** das Fahrzeug (16) zumindest zwei Fahrgastaufnahmen (18) zum Aufnehmen jeweils eines Fahrgasts (20) aufweist und jeder Fahrgastaufnahme (18) ein Head-Mounted-Display (22) zugeordnet ist.

10. Fahrgeschäft (10) nach einem der Ansprüche 8 oder 9,
**dadurch gekennzeichnet, dass** die VR-Einrichtung (30) derart eingerichtet ist, dass eine der Position und der Ausrichtung des Head-Mounted-Displays (22) außerhalb des Fahrzeugs (16) entsprechende virtuelle Realität erzeugbar und auf dem dem Fahrgast (20) zugeordneten Head-Mounted-Display (22) darstellbar ist.

11. Verfahren zum Betreiben eines Fahrgeschäft (10) wie einer Achterbahn, nach einem der Ansprüche 8 bis 10, mit einer Synchronisierungsvorrichtung (12) nach einem der Ansprüche 1 bis 7, umfassend folgende Schritte:
- Erzeugen einer einer Fahrt eines Fahrgasts (18) mit dem Fahrzeug (16) entlang der Fahrstrecke (14) entsprechenden virtuellen Realität mittels einer VR-Einrichtung (30),
- Erfassen der Position des Fahrzeugs (16) auf der Fahrstrecke (14) mittels einer Fahrzeug-Positionserfassungseinrichtung (34),
- Erfassen der Position und Ausrichtung des Head-Mounted-Displays (22) mittels einer Display-Positionserfassungseinrichtung (28),
- Darstellen der virtuellen Realität auf einem dem Fahrgast (20) zugeordneten Head-Mounted-Display (22),
- Synchronisieren der virtuellen Realität mit der Position und der Ausrichtung des Head-Mounted-Displays (22), sobald ein wählbares Startkriterium erfüllt ist, wobei die virtuelle Realität unter Berücksichtigung der Position des Fahrzeugs (16) auf der Fahrstrecke (14) und der Position und der Ausrichtung des Head-Mounted-Displays (22) auf dem Head-Mounted-Display (22) dargestellt wird.

12. Verfahren nach Anspruch 11, umfassend folgende Schritte:
- Definieren eines Synchronisierungsbereichs (44) mittels der Display-Positionserfassungseinrichtung (28), und
- Synchronisieren der virtuellen Realität mit der Position und der Ausrichtung des Head-Mounted-Displays (22), wenn sich das Head-Mounted-Display (22) innerhalb des Synchronisierungsbereichs (44) befindet, wodurch das Startkriterium erfüllt ist.

13. Verfahren nach einem der Ansprüche 11 oder 12, umfassend folgende Schritte:
- Erzeugen eines Signals mittels einer am Head-Mounted-Display (22) angeordneten Schalteinrichtung (23), wenn der Fahrgast das Head-Mounted-Display (22) aufsetzt und
- Senden dieses Signals an die Synchronisierungsvorrichtung (12), wobei das Startkriterium dann erfüllt ist, wenn die Synchronisierungsvorrichtung (12) dieses Signal empfängt.

14. Verfahren nach einem der Ansprüche 11 bis 13, umfassend folgenden Schritt:
- Darstellen der virtuellen Realität auf dem Head-Mounted-Display (22), sobald die Fahrzeug-Positionserfassungseinrichtung (34) erkennt, dass sich das Fahrzeug (16) entlang der Fahrstrecke (16) bewegt, wodurch das Startkriterium erfüllt ist.

15. Verfahren nach einem der Ansprüche 11 bis 14, umfassend folgende Schritte:
- Ablegen des Head-Mounted-Displays (22) auf einer Basisstation (24), und
- Synchronisieren der virtuellen Realität mit der Position und der Ausrichtung des Head-Mounted-Displays (22), sobald die Display-Positionserfassungseinrichtung (28) erkennt, dass das Head-Mounted-Display (22) von der Basisstation (24) entnommen wird, wodurch das Startkriterium erfüllt ist.

## Claims

1. Synchronization apparatus for synchronizing head-mounted displays (22) with a virtual world, in particular in an amusement ride (10), comprising
- at least one head-mounted display (22), by means of which a virtual reality generated by a VR apparatus (30) can be displayed, and
- a display position detection apparatus (28) for detecting the position and orientation of the head-mounted display (22), wherein
- the synchronization apparatus (12) is configured such that the virtual reality is synchronized with the head-mounted display (22), based on the position and orientation of the head-mounted display (22) detected by the display position detection apparatus (28), as soon as a selectable start criterion is fulfilled,
**characterized in that**
the synchronization apparatus (12) comprises a base station (24) for depositing the head-mounted display (22) and **in that** the start criterion is fulfilled as soon as the display position detection apparatus (28) detects that the head-mounted display (22) is removed from the base station (24).

2. Synchronization apparatus in accordance with claim 1,
**characterized in that** the display position detection apparatus (28) is configured such that it defines a synchronization area (44) and **in that** the start criterion is fulfilled when the head-mounted display (22) is within the synchronization area (44).

3. Synchronization apparatus in accordance with either claim 1 or 2,
**characterized in that** the head-mounted display (22) comprises a switching apparatus (23) that generates a signal and sends it to the synchronization apparatus (12) when the passenger puts on the head-mounted display (22) and the start criterion is fulfilled when the synchronization apparatus (12) receives this signal.

4. Synchronization apparatus in accordance with any of the preceding claims,
**characterized in that** the base station (24) comprises presence detection means (46) with which it can be detected whether the head-mounted display (22) is deposited in the base station (24) and when the head-mounted display (22) is removed from the base station (24).

5. Synchronization apparatus in accordance with any of the preceding claims,
**characterized in that** the base station (24) comprises a charging device (27) for charging the head-mounted display (22).

6. Synchronization apparatus in accordance with any of the preceding claims,
**characterized in that** the display position detection apparatus is equipped with assignment means (29) that allow for the precise assignment of the head-mounted display.

7. Synchronization apparatus in accordance with any of the preceding claims,
**characterized in that** the assignment means (29) comprise markers (29) arranged on the head-mounted display (22).

8. Amusement ride (10), in particular a roller coaster, comprising
- a circuit track (14) on which at least one vehicle (16) is movably disposed, wherein the vehicle (16) is constructed to accommodate at least one passenger (20),
- a VR apparatus (30), by means of which virtual reality can be generated that corresponds to a ride of the passenger (20) in the vehicle (16) along the circuit track (14) and which can be displayed on a head-mounted display (22) assigned to the passenger (20),
- a vehicle position detection apparatus (34) (38) for detecting the position of the vehicle (16) on the circuit track (14), and
- a synchronization apparatus (12) in accordance with any of the preceding claims, configured such that the virtual reality is synchronized with the head-mounted display (22), based on the position and orientation of the head-mounted display (22) detected by the display position detection apparatus (28) and on the position of the vehicle (16) on the circuit track (14), as soon as a selectable start criterion is fulfilled.

9. Amusement ride (10) in accordance with claim 8,
**characterized in that** the vehicle (16) comprises at least two passenger reception means (18), each for the reception of one passenger (20) and **in that** a head-mounted display (22) is assigned to every passenger reception means (18).

10. Amusement ride (10) in accordance with either of claims 8 or 9,
**characterized in that** the VR apparatus (30) is configured such that a virtual reality can be generated and displayed on the head-mounted display (22) assigned to the passenger (20) that corresponds to the position and orientation of the head-mounted display (22) outside of the vehicle (16).

11. Method for operating an amusement ride (10) such as a roller coaster, in accordance with any of claims 8 to 10, with a synchronization apparatus (12) in accordance with any of claims 1 to 7, comprising the following steps:
- generating a virtual reality corresponding to a ride of a passenger (20) in a vehicle (16) along the circuit track (14) by means of a VR apparatus (30),
- detecting the position of the vehicle (16) on the circuit track (14) by means of a vehicle position detection apparatus (34),
- detecting the position and orientation of the head-mounted display (22) by means of a display position detection apparatus (28),
- displaying a virtual reality on a head-mounted display (22) assigned to the passenger (20)
- synchronizing the virtual reality with the position and the orientation of the head-mounted display (22) as soon as a selectable criterion is fulfilled, wherein the virtual reality is displayed on the head-mounted display (22) based on the position of the vehicle (16) on the circuit track (14) and on the position and orientation of the head-mounted display (22).

12. Method in accordance with claim 11, comprising the following steps:
- defining a synchronization area (44) by means of the display position detection apparatus (28), and
- synchronizing the virtual reality with the position and the orientation of the head-mounted display (22) when the head-mounted display (22) is within the synchronization area (44), thereby fulfilling the start criterion.

13. Method in accordance with either of claims 11 or 12, comprising the following steps:
- generating a signal by means of a switching apparatus (23) arranged on the head-mounted display (22) when the passenger puts on the head-mounted display (22) and
- sending this signal to the synchronization apparatus (12), wherein the start criterion is fulfilled when the synchronization apparatus (12) receives this signal.

14. Method in accordance with any of claims 11 to 13, comprising the following steps:
- displaying the virtual reality on the head-mounted display (22) as soon as the vehicle position detection apparatus (34) detects that the vehicle (16) is moving along the circuit track (16), thereby fulfilling the start criterion.

15. Method in accordance with any of claims 11 to 14, comprising the following steps:
- depositing the head-mounted display (22) at a base station (24), and
- synchronizing the virtual reality with the position and the orientation of the head-mounted display (22) as soon as the display position detection apparatus (28) detects that the head-mounted display (22) is removed from the base station (24), thereby fulfilling the start criterion.

## Revendications

1. Dispositif de synchronisation pour synchroniser des lunettes de visualisation (22) avec un monde virtuel notamment dans le cas d'une attraction foraine (10) comprenant :
- au moins des lunettes de visualisation (22) pour représenter la réalité virtuelle générée par une installation de réalité virtuelle (30),
- une installation de saisie de la position des lunettes (28) pour saisir la position et l'orientation des lunettes de visualisation (22),
selon lequel
- l'installation de synchronisation (12) étant conçue pour que la réalité virtuelle soit synchronisée avec les lunettes de visualisation (22) en tenant compte de la position et de l'orientation des lunettes de visualisation (22) saisies par l'installation de saisie de la position des lunettes (28), dès qu'un critère de départ sélectionné est rempli,
dispositif de synchronisation (12) **caractérisé en ce qu'**il comprend :
une station de base (24) pour déposer les lunettes de visualisation (22) et le critère de départ est rempli dès que l'installation de saisie de la position des lunettes (28) reconnaît que les lunettes de visualisation (22) ont été prises de la station de base (24).

2. Dispositif de synchronisation selon la revendication 1,
**caractérisé en ce que**
l'installation de saisie de la position des lunettes (28) est conçue pour définir une plage de synchronisation (44) et le critère de départ est alors rempli si les lunettes de visualisation (22) se trouvent dans la plage de synchronisation (44).

3. Dispositif de synchronisation selon l'une des revendications 1 ou 2,
**caractérisé en ce que**
les lunettes de visualisation (22) comprennent une installation de commutation (23) qui génère un signal et l'envoie au dispositif de synchronisation (12) lorsque le passager met les lunettes de visualisation (22) et le critère de départ est rempli lorsque le dispositif de synchronisation (12) reçoit ce signal.

4. Dispositif de synchronisation selon l'une des revendications précédentes,
**caractérisé en ce que**
la station de base (24) comporte des moyens de détection de présence (46) qui permettent de reconnaître si les lunettes de visualisation (22) ont été déposées dans la station de base (24) et si les lunettes de visualisation (22) sont prises de la station de base (24).

5. Dispositif de synchronisation selon l'une des revendications précédentes,
**caractérisé en ce que**
la station de base (24) comporte un chargeur (27) pour charger les lunettes de visualisation (22).

6. Dispositif de synchronisation selon l'une quelconque des revendications précédentes,
**caractérisé en ce que**
l'installation de saisie de la position des lunettes de visualisation est équipée d'un moyen d'attribution (29) qui permet une attribution univoque des lunettes de visualisation.

7. Dispositif de synchronisation selon l'une des revendications précédentes,
**caractérisé en ce que**
les moyens d'attribution (29) comprennent des marqueurs (29) installés sur les lunettes de visualisation (22).

8. Attraction foraine (10) notamment grand huit comprenant :
- un trajet (14) sur lequel circule au moins un véhicule (16), conçu pour recevoir au moins deux passagers (20),
- une installation de réalité virtuelle (30) qui génère une réalité virtuelle correspondante sur le parcours du passager (20) avec le véhicule (16) le long du trajet (14), cette réalité virtuelle étant affichée sur les lunettes de visualisation (22) attribuées au passage (20),
- une installation de saisie de position de véhicule (34, 38) qui saisit la position du véhicule (16) sur le trajet (14), et
- un dispositif de synchronisation (12) selon l'une des revendications précédentes conçu pour synchroniser la réalité virtuelle avec les lunettes de visualisation (22) en tenant compte de la position et de l'orientation des lunettes de visualisation (22) et de la position du véhicule (16) sur le trajet (14), informations qui ont été saisies par le moyen de saisie de position (28), dès qu'un critère de départ sélectionné est rempli.

9. Attraction foraine (10) selon la revendication 8,
**caractérisée en ce que**
le véhicule (16) comporte au moins deux places de passager (18) pour recevoir chacune un passager (20) à chaque place de passager (18) et attribuer des lunettes de visualisation (22).

10. Attraction foraine (10) selon l'une des revendications 8 ou 9,
**caractérisée en ce que**
l'installation de réalité virtuelle (30) génère une réalité virtuelle à l'extérieur du véhicule (16) correspondant à la position et à l'orientation des lunettes de visualisation (22) et qui peut être présentée dans les lunettes de visualisation (22) du passager (20).

11. Procédé de gestion d'une attraction foraine (10) telle qu'un grand huit selon l'une des revendications 6 à 10, comprenant un dispositif de synchronisation (12) selon l'une des revendications 1 à 7, ce procédé comprenant les étapes suivantes consistant à :
- générer une réalité virtuelle à l'aide d'une installation de réalité virtuelle (30) au cours du déplacement d'un passager (18) avec le véhicule (16) le long du trajet (14),
- saisir la position du véhicule (16) sur le trajet (14) à l'aide d'une installation de saisie de position de véhicule (34),
- saisir la position et l'orientation des lunettes de visualisation (22) à l'aide d'une installation de saisie de position des lunettes (28),
- représenter la réalité virtuelle sur les lunettes de visualisation (22) attribuées au passager (20),
- synchroniser la réalité virtuelle avec la position et l'orientation des lunettes de visualisation (22) dès qu'un critère de départ sélectionné est rempli, la réalité virtuelle étant présentée sur les lunettes de visualisation (22) en tenant compte de la position du véhicule (16) sur le trajet (14) et de la position et de l'orientation des lunettes de visualisation (22).

12. Procédé selon la revendication 11,
consistant à :
- définir la plage de synchronisation (44) à l'aide de l'installation de saisie de position des lunettes (28), et
- synchroniser la réalité virtuelle avec la position et l'orientation des lunettes de visualisation (22) si les lunettes de visualisation (22) sont dans la plage de synchronisation (44), ce qui remplit ainsi le critère de départ.

13. Procédé selon l'une des revendications 11 ou 12,
consistant en outre à :
- générer un signal à l'aide d'une installation de commutation (23) attribuée aux lunettes de visualisation (22) lorsque le passager met les lunettes de visualisation (22), et
- émettre ce signal pour le dispositif de synchronisation (12), le critère de départ étant alors rempli lorsque le dispositif de synchronisation (12) reçoit ce signal.

14. Procédé selon l'une des revendications 11 à 13,
comprenant les étapes suivantes consistant à :
- représenter la réalité virtuelle sur les lunettes de visualisation (22) dès que l'installation de saisie de position de véhicule (34) reconnaît que le véhicule (16) se déplace le long du trajet (14) et que le critère de départ est ainsi rempli.

15. Procédé selon l'une des revendications 11 à 14,
comprenant les étapes suivantes consistant à :
- déposer les lunettes de visualisation (22) sur une station de base (24), et
- synchroniser la réalité virtuelle avec la position et l'orientation des lunettes de visualisation (22) dès que l'installation de saisie de position des lunettes (28) reconnaît que les lunettes de visualisation (22) ont été prises de la station de base (24) de sorte que le critère de démarrage est rempli.
